# EUROPEAN PATENT APPLICATION

(11) **EP 4 804 264 A1**
(43) Date of publication of application: **09.09.2026**
(21) Application number: 25889849.3
(22) Date of filing: 09.09.2025
(51) Int. Cl.: H01M 10/04

(54) **ELECTRODE ASSEMBLY HOLDER AND ELECTRODE TRAY COMPRISING SAME**

(30) Priority: 08.11.2024 KR 20240158492
(71) Applicant: LG Energy Solution, Ltd., Seoul 07335 (KR)
(72) Inventor: KIM, Jin Hyeok, Daejeon 34122 (KR); JEON, Jae Hyun, Daejeon 34122 (KR)
(74) Representative: Goddar, Heinz J.
(86) International application number: PCT/KR2025/095537
(87) International publication number: WO 2026/101371

(57) **Abstract**

According to exemplary embodiments, an electrode assembly holder is provided. The electrode assembly holder may include: a sidewall portion having a hollow cylindrical shape, wherein the sidewall portion includes a first portion defining an accommodating space, a second portion defining a discharge space, and a third portion interposed between the first portion and the second portion; and a plurality of bridges connecting the third portion of the sidewall portion and intersecting each other at an intersection portion.

## Description

### [Technical Field]

The present disclosure relates to an electrode assembly holder and an electrode tray including the same. This application claims the benefit of priority from Korean Patent Application No. 10-2024-0158492, filed on November 8, 2024, the entire contents disclosed therein are incorporated by reference into this disclosure.

### [Background]

A unit cell of a secondary battery is divided into cylindrical, prismatic, and pouch-type according to the type of a case. In the case of a cylindrical battery, a separator, which is an insulator, is interposed between a positive electrode and a negative electrode coated with an active material, and they are wound to form an electrode assembly in a jelly roll form, which is inserted into a battery can to constitute a battery.

As one type of cylindrical battery, a tab-less cylindrical battery cell including a tab-less electrode assembly has been proposed. The tab-less electrode assembly has a structure in which a positive electrode including segments of an uncoated portion on one long side and a negative electrode including segments of an uncoated portion on one long side are wound. The segments of the uncoated portion of the positive electrode protrude toward a lower end of the electrode assembly, and the segments of the uncoated portion of the negative electrode protrude toward an upper end of the electrode assembly. The segments of the uncoated portion protruding toward the upper end and the lower end are welded to an upper current collector plate and a lower current collector plate, respectively, and can be inserted into the battery can.

In the manufacturing process of a tab-less cylindrical battery cell, there is a need to transfer wound electrode assemblies in a jelly roll form. In order to prevent damage to the bent segments of the uncoated portion at both ends of the tab-less electrode assembly, the tab-less electrode assemblies were horizontally loaded on a tray and transferred. However, there was a problem in that existing facilities had to be modified, or new facilities had to be manufactured in situations where vertical loading was required. Accordingly, there has been a need for a new type of transfer tray capable of vertically loading and transferring tab-less electrode assemblies without damaging the uncoated portion.

### [Summary]

### [Technical Problem]

The technical problem to be solved by the present disclosure is to provide an electrode assembly holder capable of storing and transferring an electrode assembly without damage to the electrode assembly.

### [Technical Solution]

According to exemplary embodiments of the present disclosure for solving the above-described problem, an electrode assembly holder is provided. The electrode assembly holder may include a sidewall portion having a hollow cylindrical shape, wherein the sidewall portion includes a first portion defining an accommodating space, a second portion defining a discharge space, and a third portion interposed between the first portion and the second portion; and a plurality of bridges connecting the third portion of the sidewall portion and intersecting each other at an intersection portion.

The width of the accommodating space may be different from the width of the discharge space.

The width of the accommodating space may be greater than the width of the discharge space.

The width of the accommodating space may be 18.0 mm or more. The width of the accommodating space may be 24.0 mm or less. The width of the discharge space may be 13.5 mm or more. The width of the discharge space may be 19.5 mm or less.

The inner surface of the third portion may be aligned with the inner surface of the second portion in a vertical direction.

The bridges may be arranged at the same angle centered on the intersection portion.

The electrode assembly holder may further include a plurality of holes between the bridges.

Each of the plurality of holes may have a sector shape.

The length of a radius of each of the plurality of holes may be 4.0 mm or more. The length of the radius of each of the plurality of holes may be 8.0 mm or less.

The number of the plurality of holes may be 4 or more and 10 or less.

The accommodating space may be in communication with the discharge space through the plurality of holes.

Each of the plurality of holes may have the same shape.

The number of the bridges may be 2 or more and 10 or less.

The accommodating space may be configured to accommodate an electrode assembly in a jelly roll form. The electrode assembly may include segments of an uncoated portion folded toward a winding center at both ends. The bridges may support the segments of the uncoated portion of the electrode assembly.

According to exemplary embodiments of the present disclosure for solving the above-described problem, an electrode tray is provided. The electrode tray may include a plurality of the above-described electrode assembly holders; and a bottom plate supporting the electrode assembly holders at a lower portion.

### [Advantageous Effects]

According to exemplary embodiments of the present disclosure, tab-less electrode assemblies can be vertically loaded on a tray and transferred. By providing holes at a bottom portion of an electrode tray, the electrode assemblies can be transferred without damage to the electrode assemblies.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a development view illustrating a state before winding of electrodes according to exemplary embodiments.
FIG. 2 is a cross-sectional view illustrating an electrode assembly in a jelly roll form according to exemplary embodiments.
FIG. 3 is a perspective view illustrating an electrode tray according to exemplary embodiments.
FIG. 4 is a cross-sectional view illustrating an electrode assembly holder according to exemplary embodiments.
FIG. 5 is a cross-sectional view illustrating an electrode assembly holder according to exemplary embodiments.
FIG. 6 is a cross-sectional view illustrating an electrode assembly holder according to exemplary embodiments.
FIG. 7 is a flowchart illustrating a method of manufacturing a cylindrical battery according to exemplary embodiments.
FIG. 8 is a cross-sectional view illustrating a cylindrical battery according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

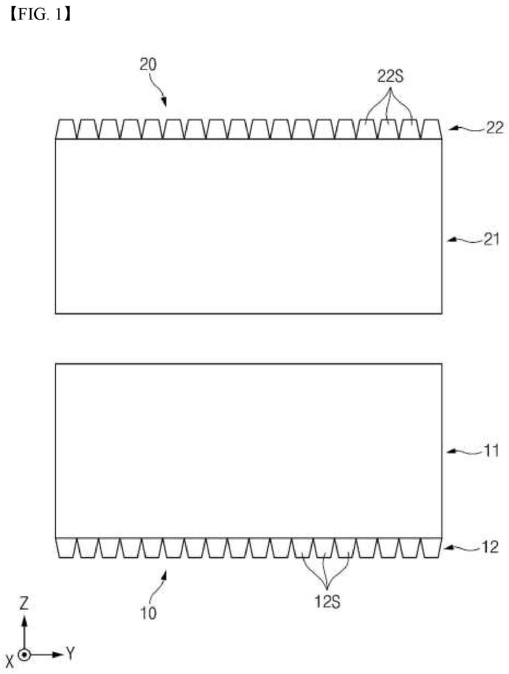

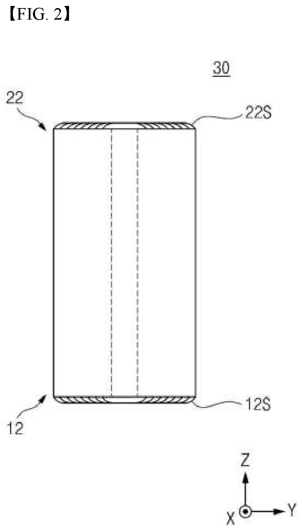

FIG. 1 is a development view illustrating electrodes 10, 20 according to exemplary embodiments. FIG. 1 illustrates a state before winding of the electrodes 10, 20. FIG. 2 is a cross-sectional view illustrating an electrode assembly 30 in a jelly roll form according to exemplary embodiments.

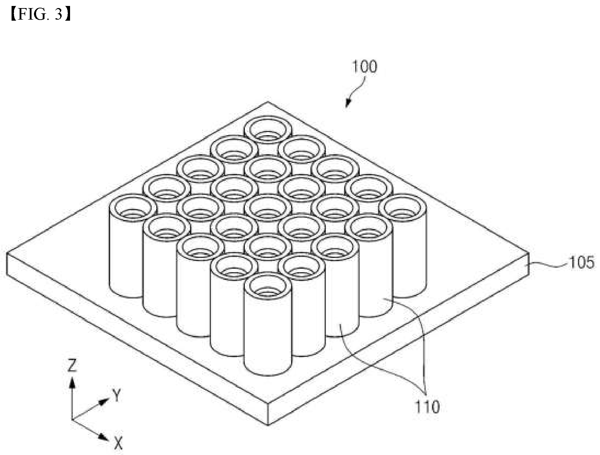

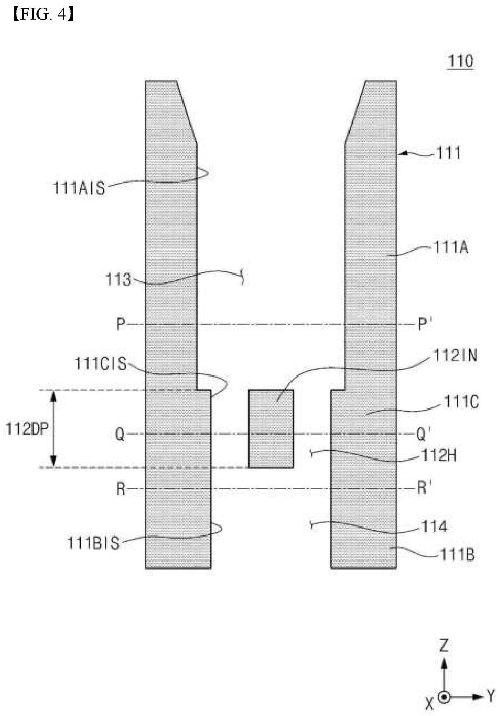

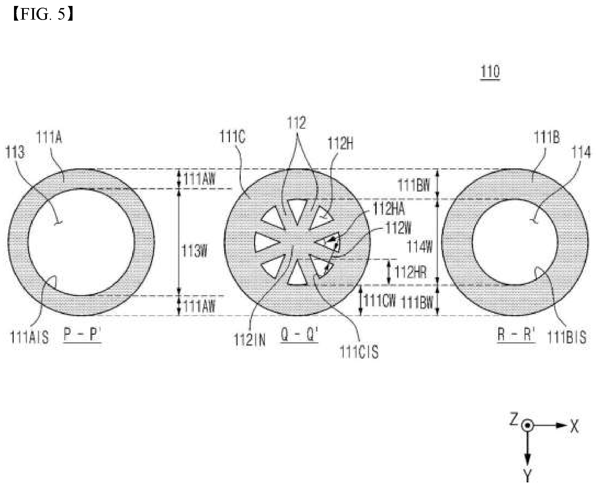

FIG. 3 is a perspective view illustrating an electrode tray 100 according to exemplary embodiments. FIG. 4 is a cross-sectional view illustrating a holder 110 of the electrode tray 100 according to exemplary embodiments. FIG. 5 is a cross-sectional view illustrating a holder 110 of an electrode tray 100 according to exemplary embodiments. FIG. 5 illustrates cross-sections taken along P-P', Q-Q', and R-R' of FIG. 4.

Referring to FIG. 1 and FIG. 2, the electrode assembly 30 in a jelly roll form may be formed by sequentially stacking a first electrode 10, a separator, a second electrode 20, and a separator to form an electrode stack, and then winding the electrode stack along a length direction (Y direction). The winding axis portion of the electrode assembly 30 in a jelly roll form may be empty. The length direction (Y direction) of each of the first electrode 10 and the second electrode 20 may correspond to a circumferential direction of the electrode assembly 30 in a jelly roll form. The width direction (Z direction) of each of the first electrode 10 and the second electrode 20 may correspond to a winding axis direction of the electrode assembly 30 in a jelly roll form. A normal direction (X direction) of a surface of each of the first electrode 10 and the second electrode 20 may correspond to a radial direction of the electrode assembly 30 in a jelly roll form.

The first electrode 10 may include a current collector and an active material layer. A portion of the first electrode 10 coated with the active material may be a coated portion 11. A portion of the first electrode 10 not coated with the active material may be an uncoated portion 12. The current collector may be exposed at the uncoated portion 12.

The uncoated portion 12 may include segments 12S arranged in the Y direction. The segments 12S may be independently folded. In the electrode assembly 30 in a jelly roll form, each of the segments 12S may be folded toward a winding center of the electrode assembly 30 in a jelly roll form.

According to exemplary embodiments, the first electrode 10 may be a positive electrode. The first electrode 10 may include an aluminum foil as the current collector. The first electrode 10 may include LiCoO₂, LiNiO₂, LiNi₁₋ₓCoₓO₂(0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), or LiFePO₄, etc., as a positive electrode active material.

The second electrode 20 may include a current collector and an active material layer. A portion of the second electrode 20 coated with the active material may be a coated portion 21. A portion of the second electrode 20 not coated with the active material may be an uncoated portion 22. The current collector may be exposed at the uncoated portion 22.

The uncoated portion 22 may include segments 22S arranged in the Y direction. The segments 22S may be independently folded. In the electrode assembly 30 in a jelly roll form, each of the segments 22S may be folded toward a winding center of the electrode assembly 30 in a jelly roll form.

According to exemplary embodiments, the second electrode 20 may be a negative electrode. The second electrode 20 may include a copper foil or a nickel foil as the current collector. The second electrode 20 may include lithium metal, graphite, coke, silicon, tin, etc., as a negative electrode active material.

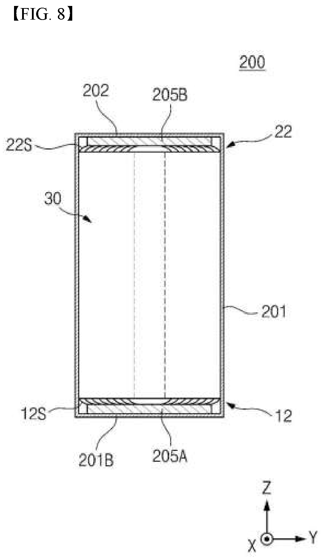

The electrode assembly 30 may be a tab-less type electrode assembly. The electrode assembly 30 may include the segments 12S of the uncoated portion 12 of the first electrode 10 protruding toward a lower end of the electrode assembly 30, and the segments 22S of the uncoated portion 22 of the second electrode 20 protruding toward an upper end of the electrode assembly 30. Each of the segments 12S, 22S of the uncoated portions 12, 22 may be folded toward the winding center of the electrode assembly 30. Each of the segments 12S, 22S of the uncoated portions 12, 22 of the electrode assembly 30 may be welded to current collector plates 205A, 205B of FIG. 8 in a cell assembly process.

Referring to FIG. 1 to FIG. 5, the electrode tray 100 may be a tray for transporting the electrode assembly 30 in a jelly roll form. For example, the electrode tray 100 may be used for transferring the electrode assembly 30 to insert the electrode assembly 30 into a can after a winding process of the electrode assembly 30. The electrode tray 100 may include a plurality of holders 110 and a bottom plate 105. The plurality of holders 110 may be disposed on the bottom plate 105. The bottom plate 105 may support the plurality of holders 110 at a lower portion.

The holder 110 may be configured to accommodate the electrode assembly 30. The electrode assembly 30 may be loaded into the holder 110 such that the uncoated portion 12 of the first electrode 10 faces downward in the Z direction and the uncoated portion 22 of the second electrode 20 faces upward in the Z direction.

The holder 110 may include a sidewall portion 111 and bridges 112.

The sidewall portion 111 may include a first portion 111A, a second portion 111B, and a third portion 111C. The third portion 111C may be interposed between the first portion 111A and the second portion 111B.

The width 111AW of the first portion 111A may be different from the width 111BW of the second portion 111B. The width 111AW of the first portion 111A may be smaller than the width 111BW of the second portion 111B. The first portion 111A may include an inner surface 111AIS. The second portion 111B may include an inner surface 111BIS. The inner surface 111AIS of the first portion 111A may not be aligned with the inner surface 111BIS of the second portion 111B in the Z direction.

The width 111CW of the third portion 111C may be different from the width 111AW of the first portion 111A. The width 111CW of the third portion 111C may be greater than the width 111AW of the first portion 111A. The width 111CW of the third portion 111C may be substantially the same as the width 111BW of the second portion 111B. The third portion 111C may include an inner surface 111CIS. The inner surface 111CIS of the third portion 111C may not be aligned with the inner surface 111AIS of the first portion 111A in the Z direction. The inner surface 111CIS of the third portion 111C may be aligned with the inner surface 111BIS of the second portion 111B in the Z direction.

The first portion 111A of the sidewall portion 111 may include a portion having a decreasing width at an upper portion. The first portion 111A of the sidewall portion 111 may include an inclined inner surface at the upper portion. When mounting the electrode assembly 30 to the holder 110, if the electrode assembly 30 is misaligned with the holder 110, the electrode assembly 30 may move along the inclined inner surface of the upper portion of the first portion 111A to be loaded into an accommodating space 113.

The holder 110 may further include the accommodating space 113 and a discharge space 114 therein. The accommodating space 113 may be defined by the first portion 111A of the sidewall portion 111. The discharge space 114 may be defined by the second portion 111B of the sidewall portion 111.

The accommodating space 113 may be a space for accommodating the electrode assembly 30 in a jelly roll form. The accommodating space 113 may have a width 113W (or diameter). According to exemplary embodiments, the width 113W of the accommodating space 113 may be about 15.0 mm or more. According to exemplary embodiments, the width 113W of the accommodating space 113 may be about 17.0 mm or more. According to exemplary embodiments, the width 113W of the accommodating space 113 may be about 18.0 mm or more. According to exemplary embodiments, the width 113W of the accommodating space 113 may be about 20.0 mm or more. According to exemplary embodiments, the width 113W of the accommodating space 113 may be about 30.0 mm or less. According to exemplary embodiments, the width 113W of the accommodating space 113 may be about 24.0 mm or less. According to exemplary embodiments, the width 113W of the accommodating space 113 may be about 23.0 mm or less. According to exemplary embodiments, the width 113W of the accommodating space 113 may be about 22.0 mm or less.

The discharge space 114 may have a width 114W (or diameter). The width 114W of the discharge space 114 may be different from the width 113W of the accommodating space 113. The width 114W of the discharge space 114 may be smaller than the width 113W of the accommodating space 113. According to exemplary embodiments, the width 114W of the discharge space 114 may be about 10.0 mm or more. According to exemplary embodiments, the width 114W of the discharge space 114 may be about 12.0 mm or more. According to exemplary embodiments, the width 114W of the discharge space 114 may be about 13.5 mm or more. According to exemplary embodiments, the width 114W of the discharge space 114 may be about 16.0 mm or more. According to exemplary embodiments, the width 114W of the discharge space 114 may be about 25.0 mm or less. According to exemplary embodiments, the width 114W of the discharge space 114 may be about 23.0 mm or less. According to exemplary embodiments, the width 114W of the discharge space 114 may be about 19.5 mm or less. According to exemplary embodiments, the width 114W of the discharge space 114 may be about 17.0 mm or less.

The discharge space 114 may be in communication with the accommodating space 113 through a plurality of holes 112H between the bridges 112. Foreign material in the accommodating space 113 may be discharged to the discharge space 114 through the plurality of holes 112H.

Each of the bridges 112 may connect the third portion 111C of the sidewall portion 111. According to exemplary embodiments, each of the bridges 112 may connect facing portions of the third portion 111C. The bridges 112 may intersect each other at an intersection portion 112IN. According to exemplary embodiments, the intersection portion 112IN may be at a center of a space defined by the third portion 111C. Each of the bridges 112 may have substantially the same thickness 112DP in the Z direction. The bridges 112 may be arranged at a predetermined angle centered on the intersection portion 112IN. According to exemplary embodiments, the bridges 112 may be arranged at substantially the same angle centered on the intersection portion 112IN.

Each of the bridges 112 may have a width 112W. According to exemplary embodiments, the width 112W of each of the bridges 112 may be about 1.0 mm or more. According to exemplary embodiments, the width 112W of each of the bridges 112 may be about 1.5 mm or more. According to exemplary embodiments, the width 112W of each of the bridges 112 may be about 2.0 mm or more. According to exemplary embodiments, the width 112W of each of the bridges 112 may be about 4.0 mm or less. According to exemplary embodiments, the width 112W of each of the bridges 112 may be about 3.5 mm or less. According to exemplary embodiments, the width 112W of each of the bridges 112 may be about 3.0 mm or less.

The first portion 111A of the sidewall portion 111 may support the electrode assembly 30 in a jelly roll form from a side. The bridges 112 may support the electrode assembly 30 in a jelly roll form from a lower portion. The bridges 112 may support the plurality of bent segments 12S of the uncoated portion 12 of the first electrode 10 of the electrode assembly 30.

Although FIG. 5 illustrates an embodiment including 4 bridges 112, the number of the bridges 112 is not limited thereto. The number of the bridges 112 may be changed according to the size or the shape of the electrode assembly 30. According to exemplary embodiments, the number of the bridges 112 may be 2 or more. According to exemplary embodiments, the number of the bridges 112 may be 3 or more. According to exemplary embodiments, the number of the bridges 112 may be 4 or more. According to exemplary embodiments, the number of the bridges 112 may be 10 or less. According to exemplary embodiments, the number of the bridges 112 may be 8 or less. According to exemplary embodiments, the number of the bridges 112 may be 6 or less.

The plurality of holes 112H may be formed between the bridges 112. Although FIG. 5 illustrates an embodiment including 8 holes 112H, the number of the plurality of holes 112H is not limited thereto. The number of the plurality of holes 112H may be changed according to the size or the shape of the electrode assembly 30, etc.

According to exemplary embodiments, the number of the plurality of holes 112H may be 2 or more. According to exemplary embodiments, the number of the plurality of holes 112H may be 4 or more. According to exemplary embodiments, the number of the plurality of holes 112H may be 6 or more. According to exemplary embodiments, the number of the plurality of holes 112H may be 20 or less. According to exemplary embodiments, the number of the plurality of holes 112H may be 16 or less. According to exemplary embodiments, the number of the plurality of holes 112H may be 10 or less.

The plurality of holes 112H may be spaced apart from each other by the bridges 112. According to exemplary embodiments, the plurality of holes 112H may be arranged at equal intervals. However, the arrangement of the plurality of holes 112H is not limited thereto, and the plurality of holes 112H may be arranged at different intervals.

According to exemplary embodiments, each of the plurality of holes 112H may have a sector shape. Each of the plurality of holes 112H may have substantially the same shape. Each of the plurality of holes 112H may have different shapes. Each of the plurality of holes 112H may have a central angle 112HA and a radius 112HR.

According to exemplary embodiments, the size of the central angle 112HA may be about 15° or more. According to exemplary embodiments, the size of the central angle 112HA may be about 30° or more. According to exemplary embodiments, the size of the central angle 112HA may be about 40° or more. According to exemplary embodiments, the size of the central angle 112HA may be about 60° or more. According to exemplary embodiments, the size of the central angle 112HA may be about 120° or less. According to exemplary embodiments, the size of the central angle 112HA may be about 100° or less. According to exemplary embodiments, the size of the central angle 112HA may be about 90° or less. According to exemplary embodiments, the size of the central angle 112HA may be about 70° or less.

According to exemplary embodiments, the size of the radius 112HR may be about 2.0 mm or more. According to exemplary embodiments, the size of the radius 112HR may be about 4.0 mm or more. According to exemplary embodiments, the size of the radius 112HR may be about 5.0 mm or more. According to exemplary embodiments, the size of the radius 112HR may be about 10.0 mm or less. According to exemplary embodiments, the size of the radius 112HR may be about 8.0 mm or less. According to exemplary embodiments, the size of the radius 112HR may be about 6.0 mm or less.

However, the shape of the plurality of holes 112H is not limited to the above-described shape. The shape of the plurality of holes 112H may be variously changed according to the shape of the bridges 112 or the size of the electrode assembly 30, etc.

The electrode assembly holder 110 according to exemplary embodiments of the present disclosure may include the plurality of bridges 112 to support the plurality of segments 12S at the lower end of the electrode assembly 30 and maintain a folded state of the plurality of segments 12S. The plurality of holes 112H between the bridges 112 may prevent excessive pressure from being applied to the plurality of segments 12S of the electrode assembly 30. Accordingly, the electrode assembly 30 can be loaded in the holder 110 and transferred without damage. In addition, since foreign materials in the accommodating space 113 can be discharged to the discharge space 114 through the plurality of holes 112H, contamination of the electrode assembly 30 can be prevented.

### (Second Embodiment)

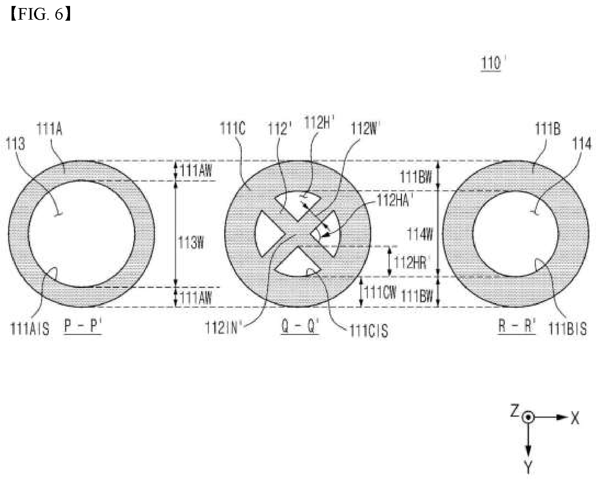

FIG. 6 is a cross-sectional view illustrating a holder 110' of an electrode tray 100 according to exemplary embodiments. FIG. 6 illustrates cross-sections corresponding to P-P', Q-Q', and R-R' of FIG. 4.

Components having the same reference numerals as those in FIG. 1 to FIG. 5 in FIG. 6 may be applied with the description described in the first embodiment, and the same description will be omitted. Hereinafter, components of the second embodiment that are different from the first embodiment will be mainly described.

Referring to FIG. 1 to FIG. 4 and FIG. 6 together, the holder 110' may include bridges 112' connecting a third portion 111C of a sidewall portion 111. The holder 110' may include a plurality of holes 112H' between the bridges 112'. In the embodiment illustrated in FIG. 6, the holder 110' includes two bridges 112' and four holes 112H'. The bridges 112' may intersect at an intersection portion 112IN'.

According to exemplary embodiments, each of the holes 112H' may have a sector shape. According to exemplary embodiments, each of the holes 112H' may have a central angle 112HA' and a radius 112HR'.

According to exemplary embodiments, the size of the central angle 112HA' may be about 15° or more. According to exemplary embodiments, the size of the central angle 112HA' may be about 30° or more. According to exemplary embodiments, the size of the central angle 112HA' may be about 45° or more. According to exemplary embodiments, the size of the central angle 112HA' may be about 60° or more. According to exemplary embodiments, the size of the central angle 112HA' may be about 120° or less. According to exemplary embodiments, the size of the central angle 112HA' may be about 100° or less. According to exemplary embodiments, the size of the central angle 112HA' may be about 90° or less. According to exemplary embodiments, the size of the central angle 112HA' may be about 70° or less.

According to exemplary embodiments, the size of the radius 112HR' may be about 2.0 mm or more. According to exemplary embodiments, the size of the radius 112HR' may be about 4.0 mm or more. According to exemplary embodiments, the size of the radius 112HR' may be about 5.0 mm or more. According to exemplary embodiments, the size of the radius 112HR' may be about 10.0 mm or less. According to exemplary embodiments, the size of the radius 112HR' may be about 8.0 mm or less. According to exemplary embodiments, the size of the radius 112HR' may be about 6.0 mm or less.

Each of the plurality of bridges 112' may have a width 112W'. According to exemplary embodiments, the width 112W' of each of the plurality of bridges 112' may be about 2.5 mm or more. According to exemplary embodiments, the width 112W' of each of the plurality of bridges 112' may be about 3.0 mm or more. According to exemplary embodiments, the width 112W' of each of the plurality of bridges 112' may be about 4.0 mm or more. According to exemplary embodiments, the width 112W' of each of the plurality of bridges 112' may be about 7.0 mm or less. According to exemplary embodiments, the width 112W' of each of the plurality of bridges 112' may be about 6.5 mm or less. According to exemplary embodiments, the width 112W' of each of the plurality of bridges 112' may be about 6.0 mm or less.

However, the shapes of the plurality of bridges 112' and the plurality of holes 112H' are not limited to the above-described shapes, and may be varied according to the size, the shape, or the structure of the holder 110' and the electrode assembly 30, etc.

### (Third Embodiment)

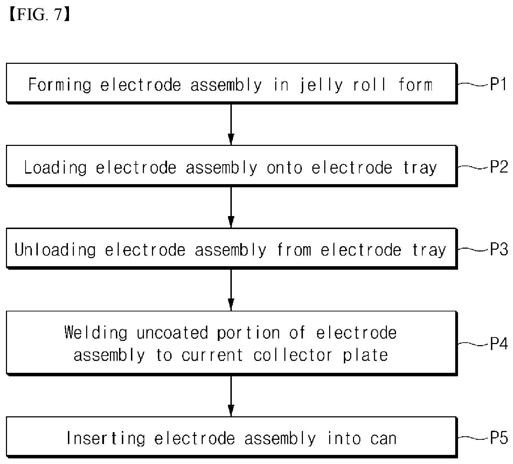

FIG. 7 is a flowchart illustrating a method of manufacturing a cylindrical battery 200 according to exemplary embodiments. FIG. 8 is a cross-sectional view illustrating a cylindrical battery 200 according to exemplary embodiments.

Referring to FIG. 1 to FIG. 5, FIG. 7, and FIG. 8 together, the method of manufacturing the cylindrical battery 200 may include a step P1 of forming an electrode assembly 30 in a jelly roll form. The electrode assembly 30 in a jelly roll form may be formed by sequentially winding a first electrode 10, a separator, a second electrode 20, and a separator around a winding core. Segments 12S of an uncoated portion 12 of a first electrode 10 may be located at a lower end of the electrode assembly 30, and the segments 22S of an uncoated portion 22 of a second electrode 20 may be located at an upper end of the electrode assembly 30. The segments 12S, 22S of the uncoated portions 12, 22 at both ends of the electrode assembly 30 may be folded toward a winding center of the electrode assembly 30. According to exemplary embodiments, the cylindrical battery 200 may be a tab-less type battery.

The method of manufacturing the cylindrical battery 200 may include a step P2 of loading the electrode assembly 30 onto an electrode tray 100. The electrode assembly 30 may be loaded into a holder 110 of the electrode tray 100. The bent segments 12S of the uncoated portion 12 located at the lower end of the electrode assembly 30 may be supported by bridges 112 of each holder 110.

The method of manufacturing the cylindrical battery 200 may include a step P3 of unloading the electrode assembly 30 from the electrode tray 100 after transferring the electrode assembly 30 to a required position. The electrode tray 100 may include the bridges 112 and a plurality of holes 112H to vertically load and transfer the electrode assembly 30 without damaging the segments 12S of the uncoated portion 12.

The method of manufacturing the cylindrical battery 200 may include a step P4 of welding the segments 12S, 22S of the uncoated portions 12, 22 of the electrode assembly 30 to current collector plates 205A, 205B, respectively. The segments 12S of the uncoated portion 12 of the electrode assembly 30 may be welded to a first current collector plate 205A. The segments 22S of the uncoated portion 22 of the electrode assembly 30 may be welded to a second current collector plate 205B.

The method of manufacturing the cylindrical battery 200 may include a step P5 of inserting the electrode assembly 30 into a can 201. Thereafter, a first current collector plate 205A may be welded to a bottom portion 201B of the can 201. A second current collector plate 205B may be welded to a top cap 202. The can 201 may serve as a positive electrode terminal connecting the cylindrical battery 200 to the outside. The top cap 202 may serve as a negative electrode terminal connecting the cylindrical battery 200 to the outside.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. An electrode assembly holder, comprising:
a sidewall portion having a hollow cylindrical shape, wherein the sidewall portion comprises a first portion defining an accommodating space, a second portion defining a discharge space, and a third portion interposed between the first portion and the second portion; and
a plurality of bridges connecting the third portion of the sidewall portion and intersecting each other at an intersection portion.

2. The electrode assembly holder of claim 1, wherein the width of the accommodating space is different from the width of the discharge space.

3. The electrode assembly holder of claim 2, wherein the width of the accommodating space is greater than the width of the discharge space.

4. The electrode assembly holder of claim 3, wherein the width of the accommodating space is 18.0 mm or more,
wherein the width of the accommodating space is 24.0 mm or less,
wherein the width of the discharge space is 13.5 mm or more, and
wherein the width of the discharge space is 19.5 mm or less.

5. The electrode assembly holder of claim 1, wherein the inner surface of the third portion is aligned with the inner surface of the second portion in a vertical direction.

6. The electrode assembly holder of claim 1, wherein the bridges are arranged at the same angle centered on the intersection portion.

7. The electrode assembly holder of claim 1, further comprising a plurality of holes between the bridges.

8. The electrode assembly holder of claim 7, wherein each of the plurality of holes has a sector shape.

9. The electrode assembly holder of claim 8, wherein the length of a radius of each of the plurality of holes is 4.0 mm or more, and
wherein the length of the radius of each of the plurality of holes is 8.0 mm or less.

10. The electrode assembly holder of claim 7, wherein the number of the plurality of holes is 4 or more and 10 or less.

11. The electrode assembly holder of claim 7, wherein the accommodating space is in communication with the discharge space through the plurality of holes.

12. The electrode assembly holder of claim 7, wherein each of the plurality of holes has the same shape.

13. The electrode assembly holder of claim 1, wherein the number of the bridges is 2 or more and 10 or less.

14. The electrode assembly holder of claim 1, wherein the accommodating space is configured to accommodate an electrode assembly in a jelly roll form,
wherein the electrode assembly comprises segments of an uncoated portion folded toward a winding center at both ends thereof, and
wherein the bridges support the segments of the uncoated portion of the electrode assembly.

15. An electrode tray, comprising:
a plurality of the electrode assembly holders according to claim 1; and
a bottom plate supporting the electrode assembly holders at a lower portion.
